# EUROPÄISCHE PATENTSCHRIFT

(11) **EP 3 060 945 B1**
(45) Veröffentlichungstag und Bekanntmachung des Hinweises auf die Patenterteilung: **09.06.2021**
(21) Anmeldenummer: 14759180.4
(22) Anmeldetag: 04.09.2014
(51) Int. Cl.: G01V 3/165

(54) **ORTUNGSGERÄT**
LOCATING DEVICE
DISPOSITIF DE LOCALISATION

(30) Priorität: 23.10.2013 DE 102013221495
(43) Veröffentlichungstag der Anmeldung: 31.08.2016
(73) Patentinhaber: Robert Bosch GmbH, 70442 Stuttgart (DE)
(72) Erfinder: ALBRECHT, Andrej, 70771 Leinfelden-Echterdingen (DE)
(86) Internationale Anmeldenummer: PCT/EP2014/068832
(87) Internationale Veröffentlichungsnummer: WO 2015/058893

(56) Entgegenhaltungen:
- GB-A- 2 401 951
- US-A- 5 670 882
- US-A- 5 773 971

## Beschreibung

### Stand der Technik

Es ist bereits ein Ortungsgerät mit einer Wechselspannungsortungsvorrichtung, die ein erstes Empfangsmittel aufweist, das dazu vorgesehen ist, ein erstes Koppelsignal von einem Ortungsobjekt zu empfangen, zumindest ein zweites Empfangsmittel aufweist, das dazu vorgesehen ist, zumindest ein zweites Koppelsignal von dem Ortungsobjekt zu empfangen, und zumindest eine erste Verstärkerschaltung aufweist, die in zumindest einem Betriebszustand eine Differenz des ersten Koppelsignals relativ zu einem Referenzsignal verstärkt, vorgeschlagen worden. Beispiele derartiger Ortungsgeräte finden sich in US 5 670 882 A, US 5 773 971 A und GB 2 401 951 A.

### Offenbarung der Erfindung

Die Erfindung geht aus von einem Ortungsgerät mit einer Wechselspannungsortungsvorrichtung, die ein erstes Empfangsmittel aufweist, das dazu vorgesehen ist, ein erstes Koppelsignal von einem Ortungsobjekt zu empfangen, zumindest ein zweites Empfangsmittel aufweist, das dazu vorgesehen ist, zumindest ein zweites Koppelsignal von dem Ortungsobjekt zu empfangen, und zumindest eine erste Verstärkerschaltung aufweist, die in zumindest einem Betriebszustand eine Differenz des ersten Koppelsignals relativ zu einem Referenzsignal verstärkt.

Es wird vorgeschlagen, dass die Wechselspannungsortungsvorrichtung zumindest eine zweite Verstärkerschaltung aufweist, die in zumindest einem Betriebszustand eine Differenz des ersten Koppelsignals und des zweiten Koppelsignals verstärkt. Unter einer "Wechselspannungsortungsvorrichtung" soll insbesondere eine Vorrichtung verstanden werden, die zu einer Ermittlung einer Positionsinformation eines in einem Werkstück verdeckt angeordneten Ortungsobjekts, an dem eine Wechselspannung anliegt, vorgesehen ist. Vorzugsweise ist die Wechselspannungsortungsvorrichtung zumindest dazu geeignet, eine in einer Wand angeordnete Stromleitung zu orten, an der eine Netzspannung, vorzugsweise zwischen 100 Volt und 240 Volt, mit einer Frequenz von vorteilhaft 50 Hz, anliegt. Insbesondere soll unter einem "Empfangsmittel" ein Mittel verstanden werden, das dazu vorgesehen ist, eine Leistung induktiv und/oder kapazitiv von dem Ortungsobjekt zu empfangen. Vorzugsweise ist das Empfangsmittel als eine, dem Fachmann als sinnvoll erscheinende Antenne ausgebildet, besonders bevorzugt jedoch als elektrisch leitende Fläche. Vorzugsweise weist die Wechselspannungsortungsvorrichtung genau zwei Empfangsmittel auf. Alternativ könnte die Wechselspannungsortungsvorrichtung zumindest drei oder insbesondere zumindest vier Empfangsmittel aufweisen. Vorzugsweise weist das Ortungsgerät weitere, dem Fachmann als sinnvoll erscheinende Sendemittel und/oder Empfangsmittel zur induktiven, kapazitiven und/oder hochfrequenten Ortung von spannungsführenden und/oder spannungsfreien Ortungsobjekten auf. Unter "vorgesehen" soll insbesondere speziell programmiert, ausgelegt, elektrisch leitend verbunden und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Koppelsignal" soll insbesondere ein Signal verstanden werden, das durch eine induktive und/oder vorteilhaft kapazitive Kopplung von dem verdeckt angeordneten Ortungsobjekt durch das Werkstück auf das Ortungsgerät übertragen wird. Unter einem "Ortungsobjekt" soll insbesondere ein in und/oder hinter dem Werkstück verdeckt angeordnetes, mit dem Ortungsgerät ortbares Objekt verstanden werden. Vorzugsweise ist das Ortungsobjekt als eine Wechselstromleitung ausgebildet. Insbesondere soll unter einer "Wechselstromleitung" ein elektrischer Leiter verstanden werden, an dem eine Wechselspannung, insbesondere eine Netzspannung, anliegt. Unter dem Begriff "empfangen" soll insbesondere verstanden werden, dass die Empfangsmittel die drahtlos übertragenen Koppelsignale in drahtgebunden übertragene Koppelsignale wandeln. Insbesondere soll unter einer "Verstärkerschaltung" eine Schaltung verstanden werden, die dazu vorgesehen ist, einen Unterschied zwischen einem Wert, insbesondere eines Stroms und/oder vorteilhaft einer Spannung, eines ersten Signals und einem Wert eines zweiten Signals verstärkt auszugeben. Vorzugsweise gibt die Verstärkerschaltung ein Ausgangssignal aus, das von der Differenz des ersten Signals und des zweiten Signals abhängig ist. Vorzugsweise weist das Ortungsgerät zumindest zwei Verstärkerschaltungen auf. Alternativ könnte das Ortungsgerät zumindest drei Verstärkerschaltungen aufweisen, deren Empfangsmittel vorteilhaft in unterschiedlichen Richtungen voneinander beabstandet sind. Vorzugsweise sind die Verstärkerschaltungen zumindest im Wesentlichen, besonders bevorzugt vollständig, dazu vorgesehen, die Koppelsignale analog zu verarbeiten. Unter einem "Referenzsignal" soll insbesondere ein elektrisches Potenzial verstanden werden, das relativ zu einem Potenzial der Umgebung zumindest im Wesentlichen konstant ist. Vorzugsweise sind das Referenzsignal und das Potenzial der Umgebung kapazitiv insbesondere über den Bediener gekoppelt. Insbesondere sind das Referenzsignal und die Koppelsignale hochohmig gekoppelt, das heißt insbesondere mit einem Widerstand größer als 100 kΩ, vorteilhaft größer als 1 MΩ, besonders vorteilhaft größer als 10 MΩ. Insbesondere soll unter einer "Differenz" in diesem Zusammenhang ein Unterschied zwischen einem Wert eines ersten Signals und einem Wert einen zweiten Signals verstanden werden. Unter dem Begriff "verstärken" soll insbesondere verstanden werden, dass eine Wertveränderung des Ausgangssignals größer ist als eine Wertveränderung der Differenz der beiden Signale, die an Eingängen der Verstärkerschaltung anliegen. Durch die erfindungsgemäße Ausgestaltung des Ortungsgeräts kann konstruktiv einfach eine Abhängigkeit einer Ortung von einer Kopplung des Ortungsgeräts mit einer Umgebung, insbesondere über einen Bediener, vorteilhaft reduziert werden und dabei eine besonders hohe Empfindlichkeit bei geringem konstruktivem Aufwand erreicht werden. Zudem kann eine vorteilhafte Gleichtaktunterdrückung des Koppelsignals erreicht werden.

In einer weiteren Ausgestaltung wird vorgeschlagen, dass die Verstärkerschaltungen dazu vorgesehen sind, bei einer Wechselspannungsortung jeweils ein Ausgangssignal zu erzeugen, das als Rechtecksignal ausgebildet ist, wodurch eine konstruktiv einfache Auswertung erreicht werden kann. Unter einem "Ausgangssignal" sollen insbesondere Kenngrößen verstanden werden, die die Verstärkerschaltungen erzeugen und die zumindest eine Information über die Differenz der Signale aufweisen, die an den Eingängen der Verstärkerschaltungen jeweils anliegen. Vorzugsweise weisen die Verstärkerschaltungen jeweils eine analoge Endstufe auf, die das Ausgangssignal erzeugt. Alternativ oder zusätzlich könnten die Verstärkerschaltungen jeweils einen Schaltung aufweisen, die dazu vorgesehen ist, mittels eines Schwellwerts ein digitales Ausgangssignal zu erzeugen. Insbesondere soll unter dem Begriff "erzeugen" verstanden werden, dass jeweils an einem elektrischen Ausgang der Verstärkerschaltungen ein Ausgangssignal anliegt. Insbesondere soll unter einem "Rechtecksignal" ein Signal verstanden werden, das zwischen zwei Zuständen wechselt. Insbesondere unterscheidet ein Rechtecksignal von einem digitalen Signal, dass bei einem Rechtecksignal eine zeitliche Länge eines Zustands nicht vorgegeben ist. Vorzugsweise sind die Zustände des Rechtecksignals, insbesondere die Ströme und/oder vorteilhaft die Spannungen der Zustände, von Grenzen der Verstärkerschaltungen abhängig. Vorzugsweise weist das Rechtecksignal eine Grundfrequenz auf, die der Frequenz der Netzspannung entspricht.

Des Weiteren wird vorgeschlagen, dass das Ortungsgerät eine Auswertevorrichtung aufweist, die dazu vorgesehen ist, zumindest eine Phasenlage insbesondere des Ausgangssignals der ersten Verstärkerschaltung relativ zu dem Ausgangssignal der zweiten Verstärkerschaltung auszuwerten, wodurch besonders einfach eine Ortungsrichtung bestimmt werden kann. Unter der Wendung eine "Phasenlage auswerten" soll in diesem Zusammenhang insbesondere verstanden werden, dass die Auswertevorrichtung erfasst, ob die Ausgangssignale eine zumindest im Wesentlichen gleiche Phase oder eine zumindest im Wesentlichen gegengleiche Phase aufweisen. Vorzugsweise erfasst die Auswertevorrichtung zusätzlich, ob zumindest eines der Ausgangssignale in einem Betriebszustand statisch ist, das heißt über einen Zeitraum keine Wertänderung aufweist. Insbesondere wertet die Auswertevorrichtung keine Information über eine Amplitude der Ausgangssignale aus.

Ferner wird vorgeschlagen, dass die Auswertevorrichtung dazu vorgesehen ist, aus der Phasenlage zumindest eine Ortungsrichtung zu bestimmen, wodurch konstruktiv einfach eine empfindliche Ortung realisiert werden kann. Unter einer "Ortungsrichtung" soll insbesondere eine Information verstanden werden, die beschreibt, in welcher Richtung insbesondere relativ zu einem Referenzpunkt des Ortungsgeräts das Ortungsobjekt angeordnet ist.

Zudem wird vorgeschlagen, dass die Auswertevorrichtung, dazu vorgesehen ist, die Ausgangssignale binär auszuwerten, wodurch auf einen Analog-Digital-Wandler verzichtet werden kann. Unter dem Begriff "binär auswerten" soll insbesondere verstanden werden, dass die Auswertevorrichtung lediglich zwischen zwei Zuständen der Ausgangssignale unterscheidet. Vorzugsweise erfasst die Auswertevorrichtung, in welchem der zwei Zustände die Ausgangssignale sind und insbesondere wann sich die Zustände der Ausgangssignale ändern.

Weiterhin wird vorgeschlagen, dass das Referenzsignal als eine Gerätemasse der Wechselspannungsortungsvorrichtung ausgebildet ist, wodurch eine konstruktiv einfache Auswertung der Ausgangssignale der Verstärkerschaltungen möglich ist. Insbesondere ist das Referenzsignal von einer Akkuspannung des Ortungsgeräts vorteilhaft unabhängig. Insbesondere soll unter einer "Gerätemasse" eine elektrische Verbindung verstanden werden, die ein im Wesentlichen konstantes Potential relativ zu einer Umgebung aufweist. Vorzugsweise weist die Wechselspannungsortungsvorrichtung eine Versorgungsspannung mit einem Potenzial auf, das bei einem Betrieb von dem Potenzial der Gerätemasse verschieden ist. Vorzugsweise weist das Ortungsgerät einen Akku auf, der den Unterschied zwischen den Potenzialen der Gerätemasse und der Versorgungsspannung stützt.

In einer vorteilhaften Ausbildung der Erfindung wird vorgeschlagen, dass die Verstärkerschaltungen einen Verstärkungsfaktor von mindestens 50 dB aufweisen, wodurch konstruktiv einfach eine hohe Empfindlichkeit erreicht und Rechtecksignale erzeugt werden können. Unter einem "Verstärkungsfaktor" soll insbesondere ein Faktor verstanden werden, der ein Verhältnis zwischen der Differenz der Signale an den Eingängen einer der Verstärkerschaltungen und eine Differenz eines Signals an dem Ausgang dieser Verstärkerschaltung und dem Referenzsignal beschreibt.

Des Weiteren wird vorgeschlagen, dass die Verstärkerschaltungen jeweils zumindest einen Operationsverstärker aufweisen, wodurch konstruktiv einfach eine hohe Verstärkung erreicht werden kann. Unter einem "Operationsverstärker" soll insbesondere ein vorteilhaft integrierter Verstärker verstanden werden, der einen invertierenden und einen nichtinvertierenden Eingang besitzt sowie einen Verstärkungsfaktor größer als 30 dB aufweist. Insbesondere umfassen die Verstärkerschaltungen keine Gegenkopplung des Operationsverstärkers. Vorzugsweise sind die Operationsverstärker der Verstärkerschaltungen als Komparatoren beschaltet. Alternativ oder zusätzlich kann jede der Verstärkerschaltungen zumindest zwei Operationsverstärker aufweisen, die vorteilhaft als Instrumentenverstärker verschaltet sind.

Ferner wird vorgeschlagen, dass die Wechselspannungsortungsvorrichtung zumindest ein Filtermittel aufweist, das dazu vorgesehen ist, zumindest eines der Koppelsignale zu filtern, wodurch insbesondere hochfrequente Störungen vorteilhaft unterdrückt werden können. Vorzugsweise weist die Wechselspannungsortungsvorrichtung zumindest zwei Filtermittel auf, wobei jedes der Filtermittel bei einem Betrieb eines der Koppelsignale filtert. Unter einem "Filtermittel" soll insbesondere ein Mittel verstanden werden, das dazu vorgesehen ist, hochfrequente Störungen zu reduzieren. Vorzugsweise weist das Filtermittel eine 3-dB-Grenzfrequenz kleiner als 10 kHz, besonders bevorzugt kleiner als 1 kHz, auf.

Das erfindungsgemäße Ortungsgerät soll hierbei nicht auf die oben beschriebene Anwendung und Ausführungsform beschränkt sein. Insbesondere kann das erfindungsgemäße Ortungsgerät zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Ortungsgerät mit einer Wechselspannungsortungsvorrichtung,
- Fig. 2: eine schematische Ansicht der Wechselspannungsortungsvorrichtung des Ortungsgeräts aus Figur 1 sowie eines Werkstücks mit einem Ortungsobjekt und
- Fig. 3: einen Signalverlauf von Ausgangssignalen der Wechselspannungsortungsvorrichtung des Ortungsgeräts aus Figur 1.

### Beschreibung des Ausführungsbeispiels

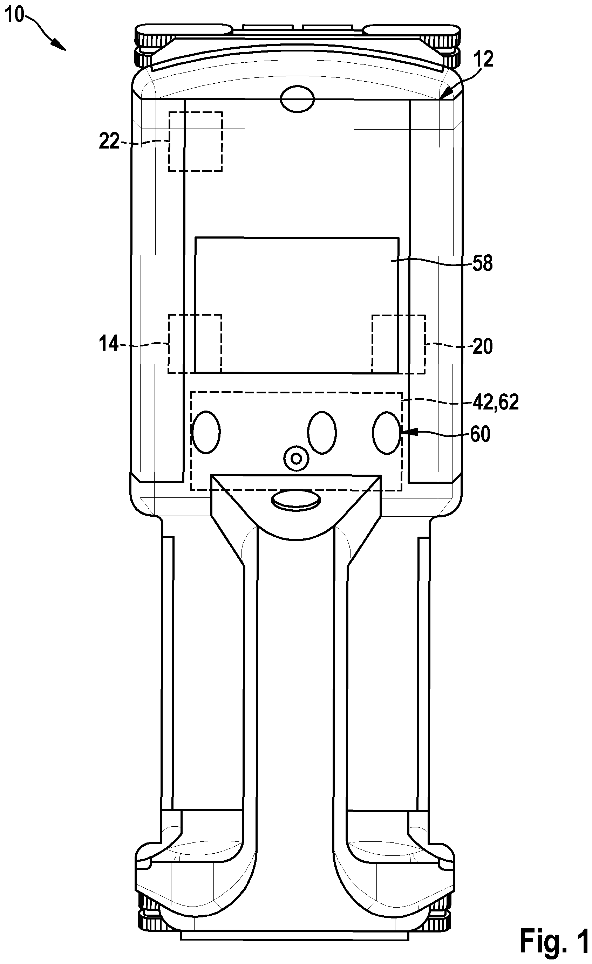

Figur 1 zeigt ein erfindungsgemäßes Ortungsgerät 10, das als ein Handortungsgerät für einen Baustelleneinsatz ausgebildet ist. Das Ortungsgerät 10 weist eine Wechselspannungsortungsvorrichtung 12, ein Display 58 zur Darstellung vor Ortungsergebnissen, eine Bedienvorrichtung 60 zur Steuerung einer Ortung durch einen Bediener und eine Recheneinheit 62 zur Bestimmung der Ortungsergebnisse auf. Figur 1 zeigt zudem eine mögliche Anordnung von drei Empfangsmitteln 14, 20, 22 der Wechselspannungsortungsvorrichtung 12. Eine andere, dem Fachmann als sinnvoll erscheinende Anordnung der zumindest drei Empfangsmittel 14, 20, 22 ist möglich.

Die Wechselspannungsortungsvorrichtung 12 weist das erste Empfangsmittel 14, das zweite Empfangsmittel 20, das dritte Empfangsmittel 22, eine erste Verstärkerschaltung 28, eine zweite Verstärkerschaltung 32, eine dritte Verstärkerschaltung 34 und eine Auswertevorrichtung 42 auf. Die Empfangsmittel 14, 20, 22 sind als Antennen ausgebildet, die dazu vorgesehen sind, jeweils ein Koppelsignal 16, 24, 26 von einem in einem Werkstück 64 verdeckt angeordneten Ortungsobjekt 18 zu empfangen. Das Ortungsobjekt 18 ist als eine elektrische Leitung ausgebildet, an der zum Zeitpunkt der Ortung zumindest eine Netzspannung anliegt.

Die Koppelsignale 16, 24, 26 sind als Wechselspannungen ausgebildet. Die Wechselspannungen weisen eine Frequenz auf, die der Frequenz der Netzspannung entspricht. Eine Amplitude der Koppelsignal 16, 24, 26 ist von einem Abstand der Empfangsmittel 14, 20, 22 von dem Ortungsobjekt 18 abhängig. Das zweite Empfangsmittel 20 und das dritte Empfangsmittel 22 sind in zwei unterschiedlichen Richtungen von dem ersten Empfangsmittel 14 beabstandet angeordnet. Hier sind die Richtungen senkrecht zueinander ausgerichtet.

Die Verstärkerschaltungen 28, 32, 34 sind als Operationsverstärker ausgebildet. Die Operationsverstärker sind unbeschaltet und weisen somit eine Funktion eines Komparators auf. Die Verstärkerschaltungen 28, 32, 34 weisen jeweils einen invertierenden Eingang - und einen nichtinvertierenden Eingang + auf. Die Wechselspannungsortungsvorrichtung 12 verbindet das erste Empfangsmittel 14 jeweils elektrisch leitend mit den invertierenden Eingängen - der Verstärkerschaltungen 28, 32, 34. Alternativ könnten die mit den invertierenden Eingang - und die mit den nichtinvertierenden Eingang + verbundenen Signale vertauscht sein.

Die Wechselspannungsortungsvorrichtung 12 verbindet ein Referenzsignal 30 der Wechselspannungsortungsvorrichtung 12 mit dem nichtinvertierenden Eingang + der ersten Verstärkerschaltung 28. Das Referenzsignal 30 ist als eine Gerätemasse der Wechselspannungsortungsvorrichtung 12 ausgebildet. Die erste Verstärkerschaltung 28 verstärkt somit bei einer Ortung eine Differenz des ersten Koppelsignals 16 relativ zu dem Referenzsignal 30.

Die Wechselspannungsortungsvorrichtung 12 verbindet das zweite Empfangsmittel 20 mit dem nichtinvertierenden Eingang + der zweiten Verstärkerschaltung 32. Die zweite Verstärkerschaltung 32 verstärkt somit bei einer Ortung eine Differenz des ersten Koppelsignals 16 relativ dem zweiten Koppelsignal 24. Das Koppelsignal 16, 24, das von dem näher an dem Ortungsobjekt 18 angeordneten der zwei Empfangsmittel 14, 20 stammt, weist einen größeren Wert, hier eine größere Spannungsamplitude, auf.

Die Wechselspannungsortungsvorrichtung 12 verbindet das dritte Empfangsmittel 22 mit dem nichtinvertierenden Eingang + der dritten Verstärkerschaltung 34. Die dritte Verstärkerschaltung 34 verstärkt somit bei einer Ortung eine Differenz des ersten Koppelsignals 16 relativ dem dritten Koppelsignal 26. Das Koppelsignal 16, 26, das von dem näher an dem Ortungsobjekt 18 angeordneten der zwei Empfangsmittel 14, 22 stammt, weist einen größeren Wert, hier eine größere Spannungsamplitude auf.

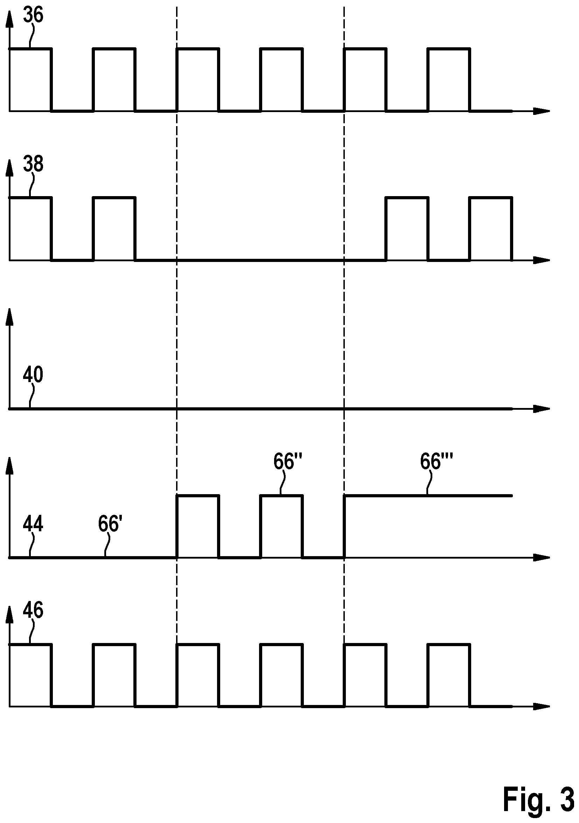

Die Operationsverstärker der Verstärkerschaltungen 28, 32, 34, an denen die Koppelsignale 16, 24, 26 anliegen, weisen einen Verstärkungsfaktor von 90 dB auf. Die Operationsverstärker der Verstärkerschaltungen 28, 32, 34 weisen keine Gegenkopplung auf. Durch die hohe Verstärkung der Verstärkerschaltungen 28, 32, 34 werden die ersten Koppelsignal 16, 24, 26 so weit verstärkt, dass Ausgangssignale 36, 38, 40 der Verstärkerschaltung 28 eine Spannungsbegrenzung der Verstärkerschaltung 28 erreichen. Wie Figur 3 zeigt, sind die Ausgangssignale 36, 38, 40 als Rechtecksignale ausgebildet.

Die Auswertevorrichtung 42 ist einstückig mit der Recheneinheit 62 ausgebildet. Die Auswertevorrichtung 42 ist dazu vorgesehen, Phasen der Ausgangssignale 38, 40 der zweiten und der dritten Verstärkerschaltung 32, 34 relativ zu dem Ausgangssignal 36 der ersten Verstärkerschaltung 28 auszuwerten. Aus den Phasen bestimmt die Auswertevorrichtung 42 die in Figur 3 dargestellten erste Phasenlage 44, die eine Phase des ersten Ausgangssignals 36 relativ zu dem zweiten Ausgangssignal 38 beschreibt, und zweite Phasenlage 46, die eine Phase des ersten Ausgangssignal 36 relativ zu dem dritten Ausgangssignal 40 beschreibt. Die Auswertevorrichtung 42 ist dazu vorgesehen, die Ausgangssignale 36, 38, 40 der Verstärkerschaltungen 28, 32, 34 binär auszuwerten.

Die Phasenlagen 44, 46 können zumindest theoretisch jeweils drei Zustände 66 annehmen, die hier anhand der ersten Phasenlage 44 erklärt werden. Bei einem ersten der drei Zustände 66' der Phasenlagen 44 weisen das erste Ausgangssignal 36 und das zweite Ausgangssignal 38 einen gleichen Werteverlauf auf. Die Phasenlage 44 ist somit auf einem geringen Wert, hier im Wesentlichen der Gerätemasse, konstant. Die ist der Fall, wenn das Ortungsobjekt 18' näher an dem ersten Empfangsmittel 14 angeordnet ist als an dem zweiten Empfangsmittel 20.

Bei einem zweiten der drei Zustände 66" der Phasenlage 44 weisen das erste Ausgangssignal 36 einen rechteckförmigen Werteverlauf und das zweite Ausgangssignal 38 einen konstanten Werteverlauf auf. Dies ist der Fall, wenn das Ortungsobjekt 18" mittig zu dem ersten Empfangsmittel 14 und dem zweiten Empfangsmittel 20 angeordnet ist. Damit dieser Zustand 66" in einem realen Betrieb eintritt, könnte die zweite Verstärkerschaltung 32 neben dem Operationsverstärker, an dem die Koppelsignale 16, 24 anliegen, einen nachgeschalteten Filter, insbesondere einen Tiefpassfilter, aufweisen, dessen Ausgangssignal an einem Komparator mit einer Hysterese, beispielsweise einem Schmitt-Trigger, anliegt. Das Filterverhalten des Filters und die Hysterese des Komparators bestimmen dabei, in welchem Wertebereich das Ortungsobjekt 18" als mittig angeordnet erkannt wird. Der Filter und der Komparator können analog aufgebaut oder alternativ mittels digitaler Signalverarbeitung umgesetzt sein. Alternativ könnte dieser zweite Zustand 66" auf andere, dem Fachmann als sinnvoll erscheinende Weise erfasst werden.

Bei einem dritten der drei Zustände 66''' der Phasenlage 44 weisen das erste Ausgangssignal 36 und das zweite Ausgangssignal 38 einen gegengleichen Werteverlauf auf. Die Phasenlage 44 ist somit auf einem hohen Wert, hier im Wesentlichen einer Versorgungsspannung der Wechselspannungsortungsvorrichtung 12, konstant. Dies ist der Fall, wenn das Ortungsobjekt 18''' näher an dem zweiten Empfangsmittel 20 angeordnet ist als an dem ersten Empfangsmittel 14.

Die Wechselspannungsortungsvorrichtung 12 weist drei Filtermittel 52, 54, 56 auf, die dazu vorgesehen sind, jeweils eines der Koppelsignale 16, 24, 26 zu filtern. Die Filtermittel 52, 54, 56 sind jeweils ein Teil eines Tiefpassfilters. Hier sind Filtermittel 52, 54, 56 als Impedanzen ausgebildet. Alternativ könnten die Filtermittel 52, 54, 56 als hochohmige Widerstände ausgebildet sein. Eingangskapazitäten der Verstärkerschaltungen 28, 32, 34 bilden einen weiteren Teil des Tiefpassfilters. Die Tiefpassfilter können alternativ einen anderen, dem Fachmann als sinnvoll erscheinenden Aufbau aufweisen.

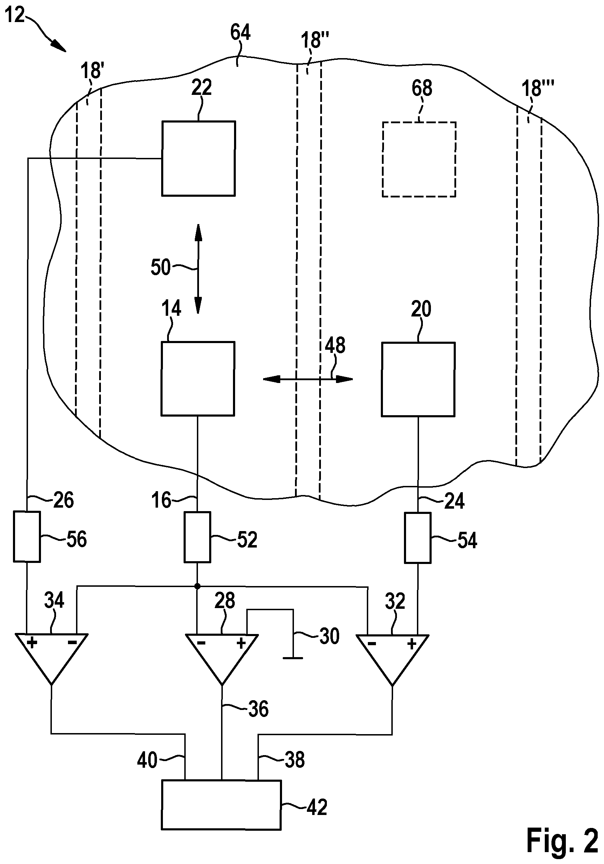

Figur 2 zeigt eine mögliche Anordnung eines weiteren, vierten Empfangsmittels 68. Die vier Empfangsmittel 14, 20, 22, 68 sind so angeordnet, dass die vier Empfangsmittel 14, 20, 22, 68 an Ecken eines Rechtecks, hier eines Quadrats, angeordnet sind. Nicht näher dargestellt sind drei weitere Verstärkerschaltungen, die dazu vorgesehen sind, die Differenzen der Koppelsignale 24, 26 des zweiten Empfangsmittels 20, des dritten Empfangsmittels 22 und des vierten Empfangsmittels 68 zu verstärken. Ein Koppelsignal des vierten Empfangsmittels 68 ist dabei jeweils mit einem der invertierenden Eingänge - der drei weiteren Verstärkerschaltungen verbunden. Die anderen Eingänge sind derart verbunden, wie es für die ersten drei Verstärkerschaltung 28, 32, 34 beschrieben ist. Durch das weitere Empfangsmittel 68 und die weiteren Verstärkerschaltungen kann die Auswertevorrichtung 42 erfassen, ob das Ortungsobjekt 18 parallel zu einer Seite der rechteckigen Anordnung ausgerichtet ist.

## Patentansprüche

1. Ortungsgerät mit einer Wechselspannungsortungsvorrichtung (12), die ein erstes Empfangsmittel (14) aufweist, das dazu vorgesehen ist, ein erstes Koppelsignal (16) von einem Ortungsobjekt (18) zu empfangen, zumindest ein zweites Empfangsmittel (20, 22) aufweist, das dazu vorgesehen ist, zumindest ein zweites Koppelsignal (24, 26) von dem Ortungsobjekt (18) zu empfangen, und zumindest eine erste Verstärkerschaltung (28) aufweist, die in zumindest einem Betriebszustand eine Differenz des ersten Koppelsignals (16) relativ zu einem Referenzsignal (30) verstärkt, **dadurch gekennzeichnet, dass** die Wechselspannungsortungsvorrichtung (12) zumindest eine zweite Verstärkerschaltung (32, 34) aufweist, die in zumindest einem Betriebszustand eine Differenz des ersten Koppelsignals (16) und des zweiten Koppelsignals (24, 26) verstärkt.

2. Ortungsgerät nach Anspruch 1, **dadurch gekennzeichnet, dass** die Verstärkerschaltungen (28, 32, 34) dazu vorgesehen sind, bei einer Wechselspannungsortung jeweils ein Ausgangssignal (36, 38, 40) zu erzeugen, das als Rechtecksignal ausgebildet ist.

3. Ortungsgerät nach Anspruch 1 oder 2, **gekennzeichnet durch** eine Auswertevorrichtung (42), die dazu vorgesehen ist, zumindest eine Phasenlage (44, 46) auszuwerten.

4. Ortungsgerät nach Anspruch 3, **dadurch gekennzeichnet, dass** die Auswertevorrichtung (42) dazu vorgesehen ist, aus der Phasenlage (44, 46) zumindest eine Ortungsrichtung (48, 50) zu bestimmen.

5. Ortungsgerät zumindest nach den Ansprüchen 2 und 3, **dadurch gekennzeichnet, dass** die Auswertevorrichtung (42) dazu vorgesehen ist, die Ausgangssignale (36, 38, 40) binär auszuwerten.

6. Ortungsgerät nach einem der vorhergehenden Ansprüche, **dadurch gekennzeichnet, dass** das Referenzsignal (30) als eine Gerätemasse der Wechselspannungsortungsvorrichtung (12) ausgebildet ist.

7. Ortungsgerät nach einem der vorhergehenden Ansprüche, **dadurch gekennzeichnet, dass** die Verstärkerschaltungen (28, 32, 34) einen Verstärkungsfaktor von mindestens 50 dB aufweisen.

8. Ortungsgerät nach einem der vorhergehenden Ansprüche, **dadurch gekennzeichnet, dass** die Verstärkerschaltungen (28, 32, 34) jeweils zumindest einen Operationsverstärker aufweisen.

9. Ortungsgerät nach einem der vorhergehenden Ansprüche, **dadurch gekennzeichnet, dass** die Wechselspannungsortungsvorrichtung (12) zumindest ein Filtermittel (52, 54, 56) aufweist, das dazu vorgesehen ist, zumindest eines der Koppelsignale (16, 24, 26) zu filtern.

## Claims

1. Locating device including an AC voltage locating apparatus (12), which includes a first receiving means (14) which is provided to receive a first coupling signal (16) from a locatable object (18), includes at least a second receiving means (20, 22) which is provided to receive at least a second coupling signal (24, 26) from the locatable object (18), and includes at least a first amplifier circuit (28) which amplifies a difference of the first coupling signal (16) relative to a reference signal (30) in at least one operating state, **characterized in that** the AC voltage locating apparatus (12) includes at least a second amplifier circuit (32, 34) which amplifies a difference of the first coupling signal (16) and the second coupling signal (24, 26) in at least one operating state.

2. Locating device according to Claim 1, **characterized in that** during AC voltage locating, the amplifier circuits (28, 32, 34) are provided to generate one output signal (36, 38, 40) each, which is formed as a square-wave signal.

3. Locating device according to Claim 1 or 2, **characterized by** an evaluation device (42) which is provided to evaluate at least one phase position (44, 46) .

4. Locating device according to Claim 3, **characterized in that** the evaluation device (42) is provided to determine at least one locating direction (48, 50) from the phase position (44, 46).

5. Locating device at least according to Claims 2 and 3, **characterized in that** the evaluation device (42) is provided to evaluate the output signals (36, 38, 40) in a binary manner.

6. Locating device according to one of the preceding claims, **characterized in that** the reference signal (30) is designed as a device ground of the AC voltage locating apparatus (12).

7. Locating device according to one of the preceding claims, **characterized in that** the amplifier circuits (28, 32, 34) have an amplification factor of at least 50 dB.

8. Locating device according to one of the preceding claims, **characterized in that** the amplifier circuits (28, 32, 34) each include at least one operational amplifier.

9. Locating device according to one of the preceding claims, **characterized in that** the AC voltage locating apparatus (12) includes at least one filter means (52, 54, 56) which is provided to filter at least one of the coupling signals (16, 24, 26).

## Revendications

1. Appareil de localisation comprenant un dispositif de localisation de tension alternative (12) qui comporte un premier moyen de réception (14) qui est prévu pour recevoir un premier signal de couplage (16) d'un objet de localisation (18), au moins un deuxième moyen de réception (20, 22) qui est prévu pour recevoir au moins un deuxième signal de couplage (24, 26) de l'objet de localisation (18), et au moins un premier circuit amplificateur (28) qui amplifie, dans au moins un état de fonctionnement, une différence entre le premier signal de couplage (16) et un signal de référence (30), **caractérisé en ce que** le dispositif de localisation de tension alternative (12) comporte au moins un deuxième circuit amplificateur (32, 34) qui amplifie une différence entre le premier signal de couplage (16) et le deuxième signal de couplage (24, 26) dans au moins un état de fonctionnement.

2. Appareil de localisation selon la revendication 1, **caractérisé en ce que** les circuits amplificateurs (28, 32, 34) sont prévus pour générer un signal de sortie (36, 38, 40), qui est conçu comme un signal rectangulaire, lors de la localisation d'une tension alternative.

3. Appareil de localisation selon la revendication 1 ou 2, **caractérisé par** un dispositif d'évaluation (42) qui est prévu pour évaluer au moins une position de phase (44, 46).

4. Appareil de localisation selon la revendication 3, **caractérisé en ce que** le dispositif d'évaluation (42) est prévu pour déterminer au moins une direction de localisation (48, 50) à partir de la position de phase (44, 46).

5. Appareil de localisation au moins selon les revendications 2 et 3, **caractérisé en ce que** le dispositif d'évaluation (42) est prévu pour évaluer les signaux de sortie (36, 38, 40) sous forme binaire.

6. Appareil de localisation selon l'une des revendications précédentes, **caractérisé en ce que** le signal de référence (30) est conçu comme une masse d'appareil du dispositif de localisation de tension alternative (12).

7. Appareil de localisation selon l'une des revendications précédentes, **caractérisé en ce que** les circuits amplificateurs (28, 32, 34) ont un facteur de gain d'au moins 50 dB.

8. Appareil de localisation selon l'une des revendications précédentes, **caractérisé en ce que** les circuits amplificateurs (28, 32, 34) comportent chacun au moins un amplificateur opérationnel.

9. Appareil de localisation selon l'une des revendications précédentes, **caractérisé en ce que** le dispositif de localisation de tension alternative (12) comporte au moins un moyen de filtrage (52, 54, 56) qui est prévu pour filtrer au moins l'un des signaux de couplage (16, 24, 26).
